# EUROPEAN PATENT APPLICATION

(11) **EP 3 846 152 A1**
(43) Date of publication of application: **07.07.2021**
(21) Application number: 19864811.5
(22) Date of filing: 27.08.2019
(51) Int. Cl.: G09F 3/02, H02G 1/06

(54) **MEDIUM AND WINDING METHOD**

(30) Priority: 28.09.2018 JP 2018184809
(71) Applicant: BROTHER KOGYO KABUSHIKI KAISHA, Aichi, 467-8561 (JP)
(72) Inventor: NAKASHIMA, Chie, Nagoya-shi, Aichi 467-8561 (JP); HOKARI, Yuki, Nagoya-shi, Aichi 467-8561 (JP); BANNO, Takaaki, Nagoya-shi, Aichi 467-8561 (JP)
(74) Representative: Prüfer & Partner mbB Patentanwälte · Rechtsanwälte
(86) International application number: PCT/JP2019/033465
(87) International publication number: WO 2020/066421

(57) **Abstract**

Provided is a medium of which rotation relative to an object does not become impeded due to stress incurred when wrapped around an object, changes in ambient conditions, or aging. A printing tape To is to be mounted in and to be printed with a label-creating device 1. The printing tape includes: a release material layer 24; a slit S; and a main label part Lo. The release material layer 24 is opaque. The slit S is provided in the release material layer 24 and has a square shape including a side Sa, a side Sb, a left side Sc, and a right side Sd. The side Sa and the side Sb oppose each other. The side Sc and the side Sd oppose each other. The main label part Lo is fixed to the release material layer 24 so as to across the side Sa of the slit S. The main label part Lo has a square shape including a side La, a side Lb, a side Lc, and a side Ld. The side La and the side Lb oppose each other. The side Lc and the side Ld oppose each other. The side Lc and the side Ld are parallel to respective ones of the side Sc and the side Sd of the slit S and within proximity of respective ones of the side Sc and the side Sd of the slit S.

## Description

### [Technical Field]

The present invention relates to a medium that is mounted and used in a printer, and a method of wrapping the same.

### [Background Art]

A label (corresponding to the medium) known in the art is provided with adhesive on the back side thereof. The label is mounted in a printer. Once printed, the label is used by attaching the label to the curved surface of an object. Depending on the application, the user may wish to wrap the label around an object such that the label is rotatably attached. For this purpose, there is known a technology for coating the adhesive on the label with varnish or another non-adhesive material so that adhesive in the portion of the label present around the outside of the object does not adhere to the object (see Patent Literature PTL 1, for example).

### [Patent Literature]

[PTL 1] Japanese Patent Application Publication No. 2004-184514

### [Summary of Invention]

### [Technical Problem]

However, a configuration such as the conventional technology described above, in which the adhesive is coated with a non-adhesive material such as varnish, may degrade due to stress incurred when wrapping the label around the object, changes in ambient conditions, or aging. With such degradation, the adhesive may become exposed and inhibit rotation of the label.

It is an object of the present invention to provide a medium whose rotation relative to an object does not become impeded due to stress incurred when wrapped around an object, changes in ambient conditions, or aging.

### [Solution to Problem]

In order to attain the above and other objects, the present invention provides a medium to be mounted in and to be printed with a printer. The medium includes: a release material; a slit; and a print label. The release material is opaque. The slit is provided in the release material and has a square shape including a first side, a second side, a third side, and a fourth side. The first side and the second side oppose each other. The third side and the fourth side oppose each other. The print label is fixed to the release material so as to span across the first side of the slit.

The medium according to the present invention has a layered structure in which a print label is fixed to an opaque release material, and is attached to the outer circumference of an object such as a cable and the like. That is, when attaching the medium to an object, the release material is peeled off, and subsequently the medium is bent into a concave shape so that the adhesive exposed after peeling the release material therefrom is on the inside. Next, the medium is wrapped once around the cable and the like placed on the inside of the concave-shaped medium to form a cylindrical body encircling the cable and the like. Subsequently, the distal end portion of the medium is bonded to the base end portion of the medium by adhesion of the adhesive. As a result, the medium can be attached to the cable and the like by wrapping the medium once around the cable and the like, while fixing the shape of the medium itself by adhesion described above.

Here, depending on the application, the user may wish to wrap the medium around the cable and the like such that the medium is rotatably attached. For this purpose, it is necessary to prevent the adhesive placed on the inside of the cylindrical body (i.e., the portion located on the outer circumference of the cable) from adhering to the cable and the like.

In the present invention, when the release material is peeled off, a portion of the release material is left on the print label to prevent the adhesive from adhering to the cable and the like.

That is, a slit having a square shape including a first side and a second side opposing each other is provided in a release material layer, and a print label is provided so as to span across the first side at least. Accordingly, when the release material is peeled off, a square region of the release material located inside the slit can be separated from the remaining portion of the release material and can be left on the print label (that is, to cover the adhesive).

As a result, when a cylindrical body is formed around a cable and the like as described above, the cable and the like is encircled while placing the square-shaped release material covering the adhesive on the inside. Accordingly, the adhesive on the cylindrical body can be prevented from adhering to the cable and the like and the medium can be rotatably attached to the cable and the like.

At this time, by using a portion of the release material to suppress adhesion according to the structure described above, this structure does not degrade due to stress incurred while being wrapped around the object, changes in ambient conditions, or aging, as occurs in the conventional method of coating the adhesive with varnish or other non-adhesive material. Thus, the adhesive does not become exposed and does not impede rotation.

### [Advantageous Effects of Invention]

According to the present invention, rotation of the medium relative to an object does not become impeded due to stress incurred when wrapped around an object, changes in ambient conditions, or aging.

### [Brief Description of Drawings]

[Fig. 1]

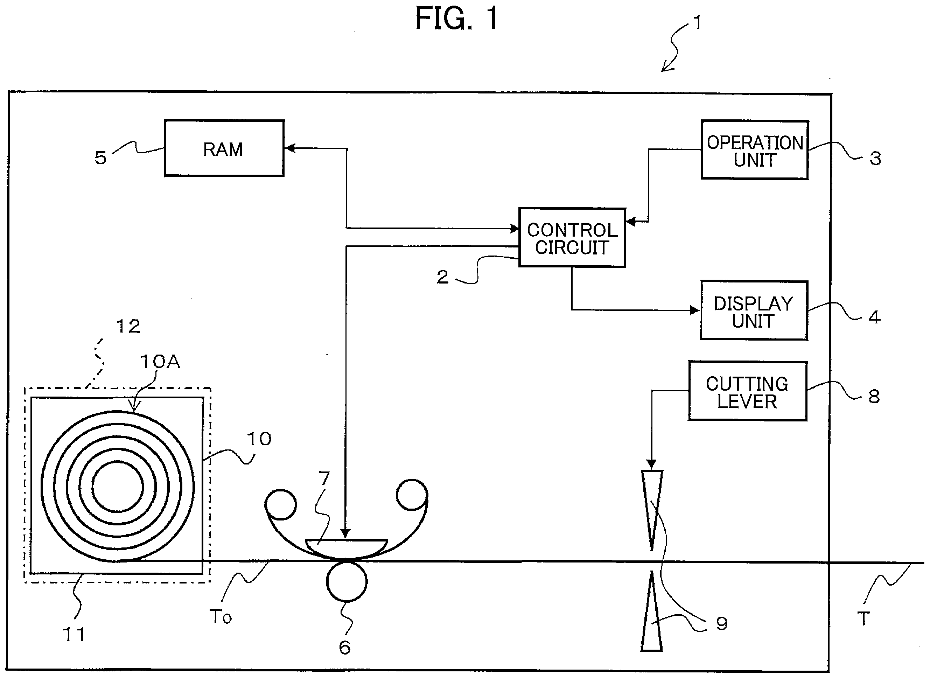

   Fig. 1 is an explanatory diagram showing a schematic configuration of a label-creating device according to one embodiment of the present invention.
[Fig. 2]

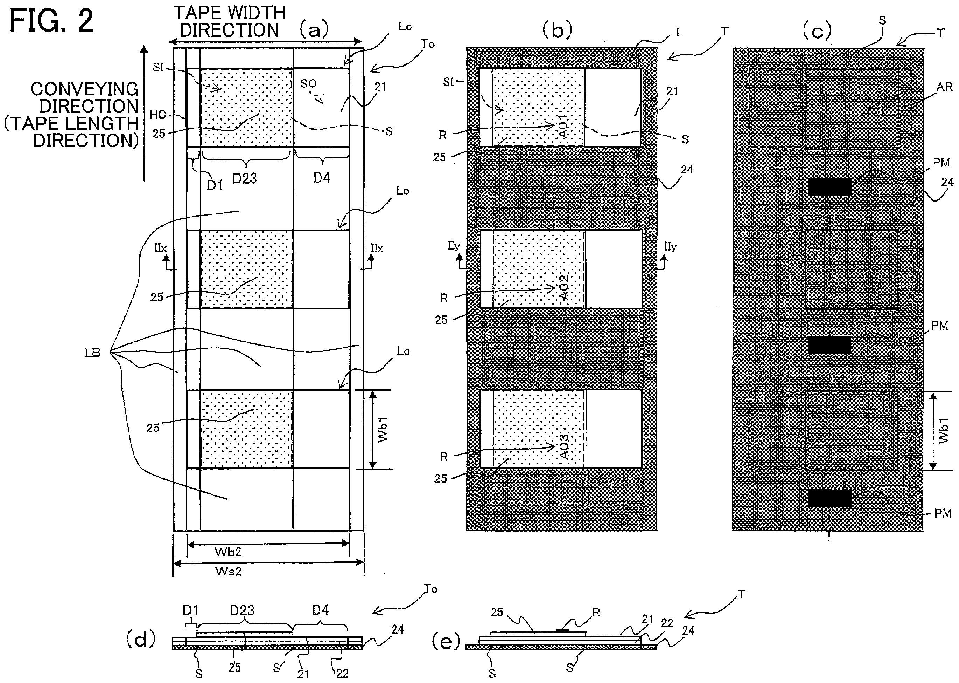

   Fig. 2(a) is a plan view showing a printing tape in an unprinted state; Fig. 2(b) is a plan view showing a printed printing tape after an excess label portion has been peeled off; Fig. 2(c) is a rear view showing the printed printing tape; Fig. 2(d) is a cross-sectional view taken along a section IIx-IIx of the structure shown in Fig. 2(a); and Fig. 2(e) is a cross-sectional view taken along a section IIy-IIy of the structure shown in Fig. 2(b).
[Fig. 3]

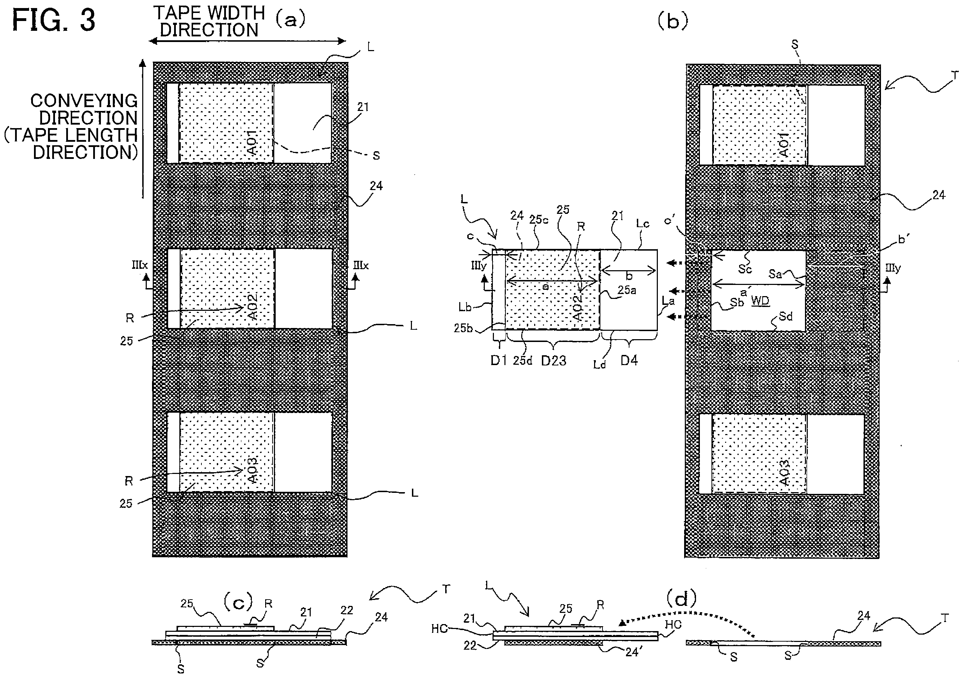

   Fig. 3(a) is a plan view showing the printed printing tape; Fig. 3(b) is a plan view showing a state of the printed printing tape after single print label has been peeled off; Fig. 3(c) is a cross-sectional view taken along a section IIIx-IIIx of the structure shown in Fig. 3(a); and Fig. 3(d) is a cross-sectional view taken along a section IIIy-IIIy of the structure shown in Fig. 3(b).
[Fig. 4]

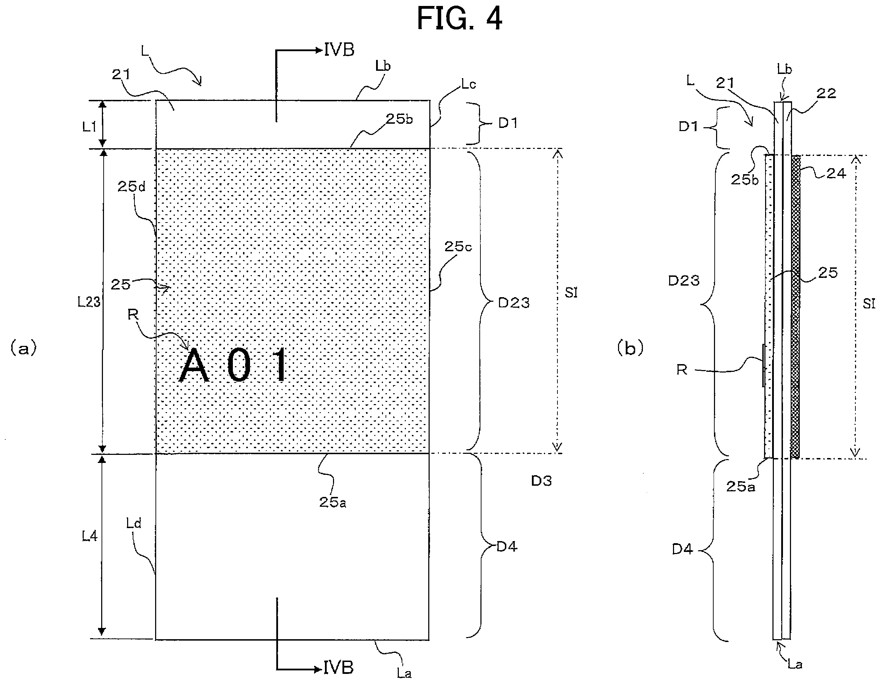

   Fig. 4(a) is a plan view showing the print label; and Fig. 4(b) is a cross-sectional view taken along a section IVB-IVB shown in Fig. 4(a).
[Fig. 5]

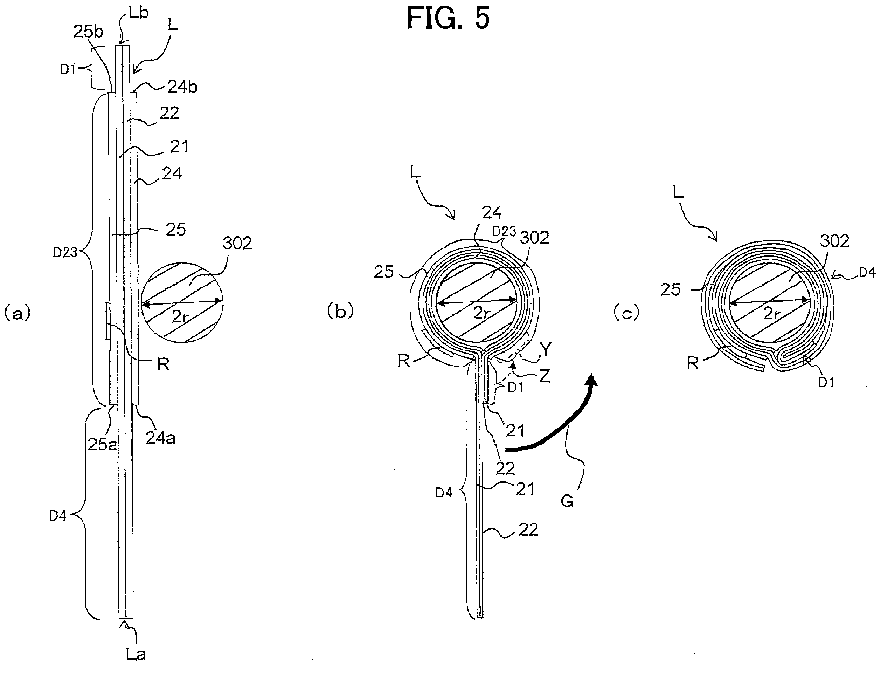

   Fig. 5 is an explanatory diagram showing a procedure for attaching the print label to an object.
[Fig. 6]

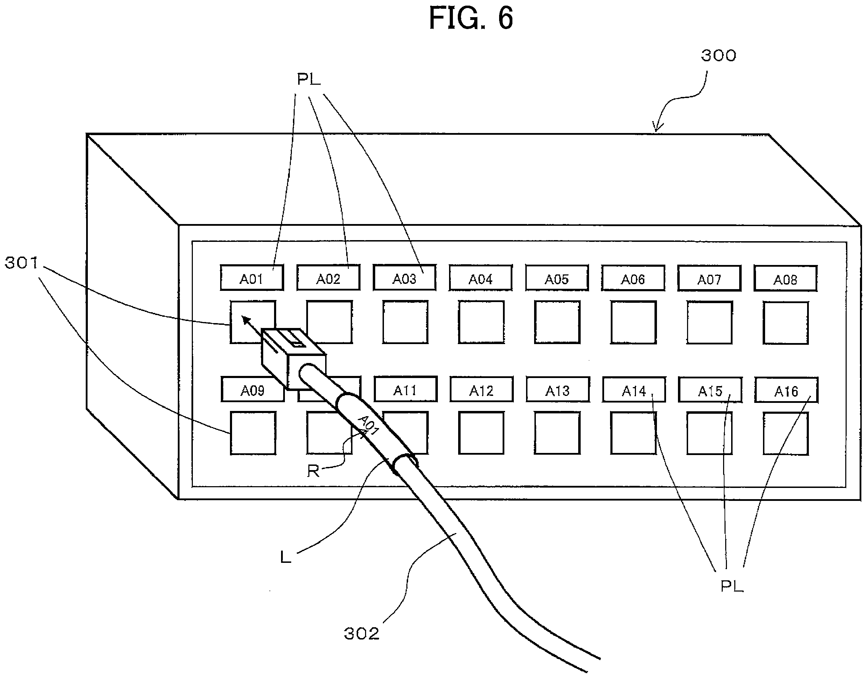

   Fig. 6 is a perspective view showing a sample application of the print label.
[Fig. 7]

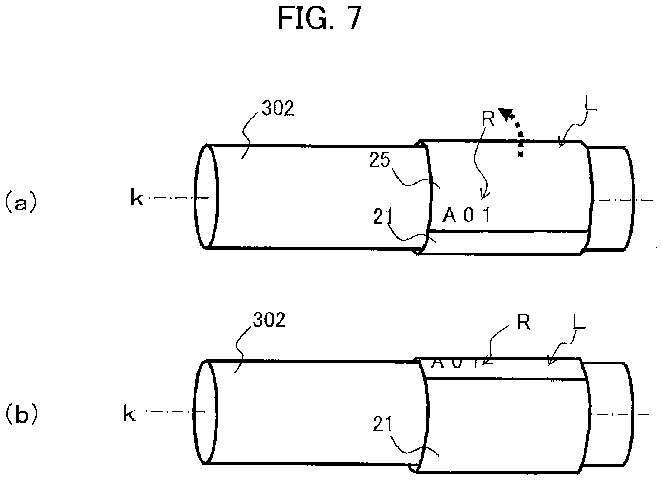

   Fig. 7 is a schematic diagram showing an attached state of the print label on a cable.
[Fig. 8]

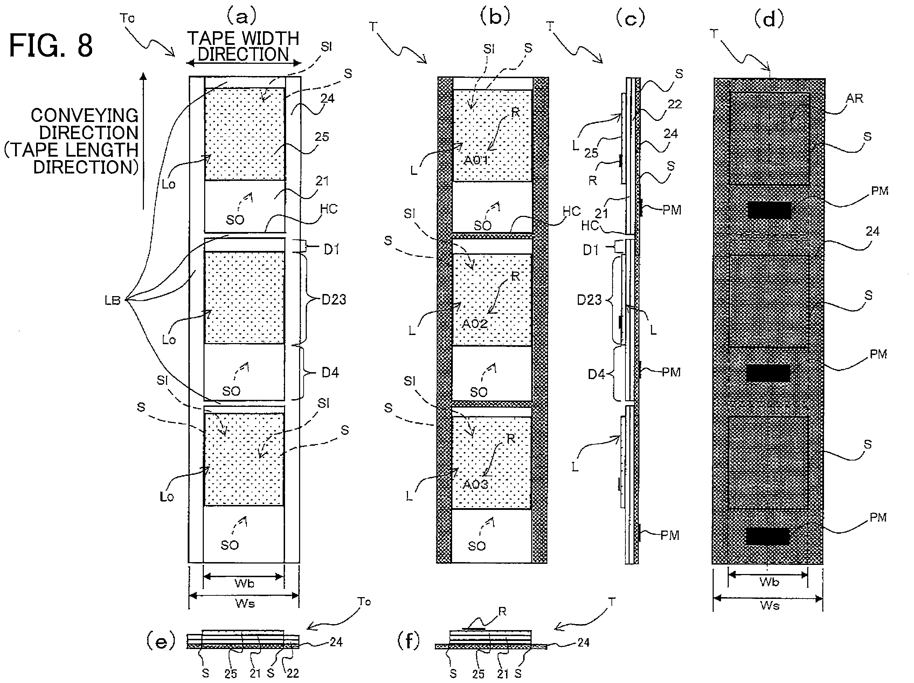

   Fig. 8(a) is a plan view showing a printing tape in an unprinted state according to a variation aligning a longitudinal direction of a label with a tape length direction; Fig. 8(b) is a plan view showing a printed printing tape after an excess label portion has been peeled off; Fig. 8(c) is a side view of the structure shown in Fig. 8(b); Fig. 8(d) is a rear view showing the printed printing tape; Fig. 8(e) is a cross-sectional view of the structure shown in Fig. 8(a); and Fig. 8(f) is a cross-sectional view of the structure shown in Fig. 8(b).
[Fig. 9]

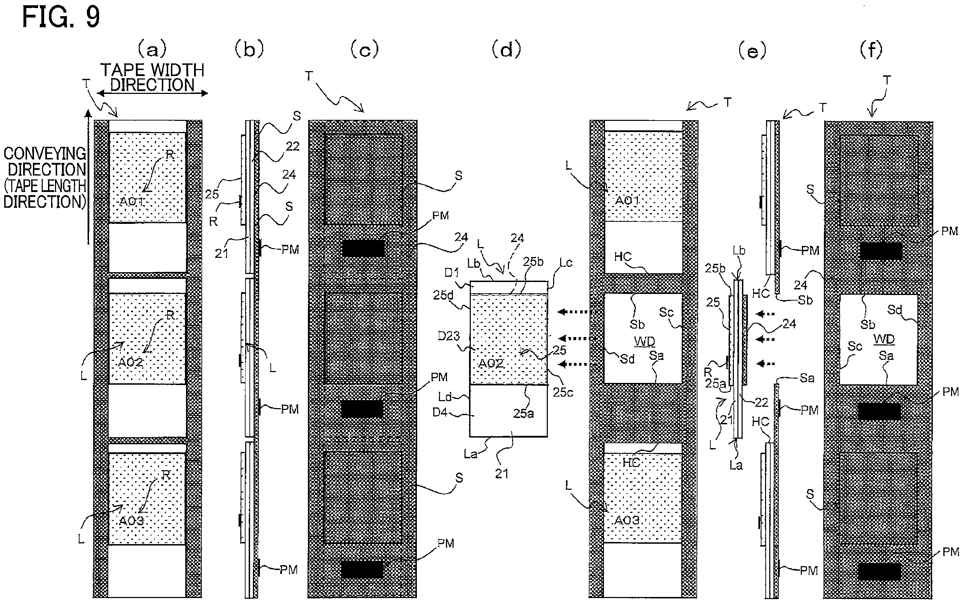

   Fig. 9(a) is a plan view showing the printed printing tape; Fig. 9(b) is a side view showing the structure shown in Fig. 9(a); Fig. 9(c) is a rear view showing the printed printing tape; Fig. 9(d) is a plan view showing a state of the printed printing tape after single print label has been peeled off; Fig. 9(e) is a side view showing the structure shown in Fig. 9(d); and Fig. 9(f) is a rear view of the printing tape after the print label has been peeled off.
[Fig. 10]

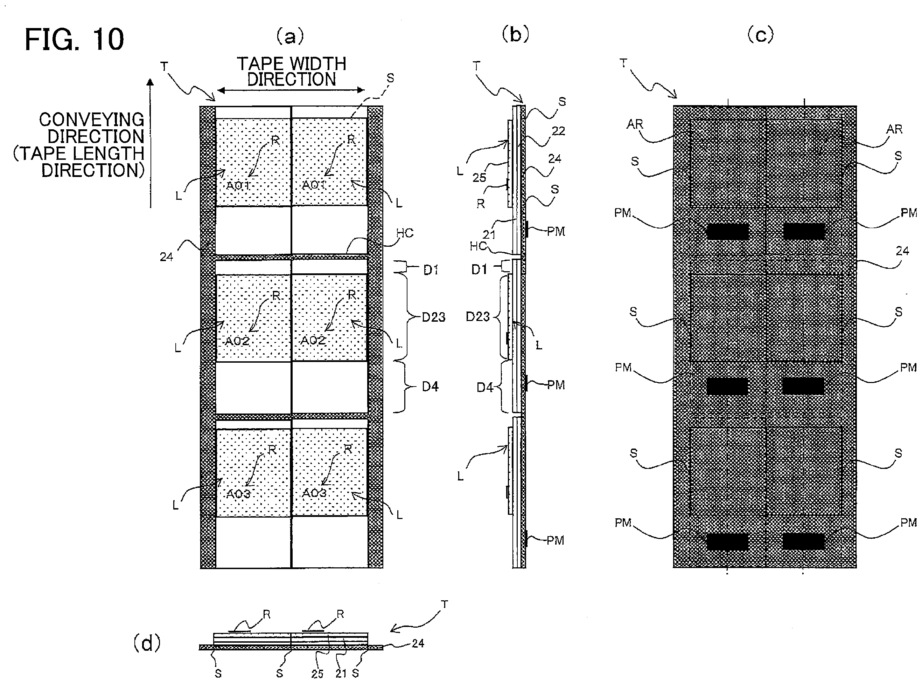

   Fig. 10(a) is a plan view showing a printing tape in an unprinted state according to a variation in which a plurality of columns of main label parts (print labels) is arranged in a tape width direction; Fig. 10(b) is a side view showing the structure shown in Fig. 10(a); Fig. 10(c) is a rear view showing the structure shown in Fig. 10(a); and Fig. 10(d) is a cross-sectional view of the structure shown in Fig. 10(a).
[Fig. 11]

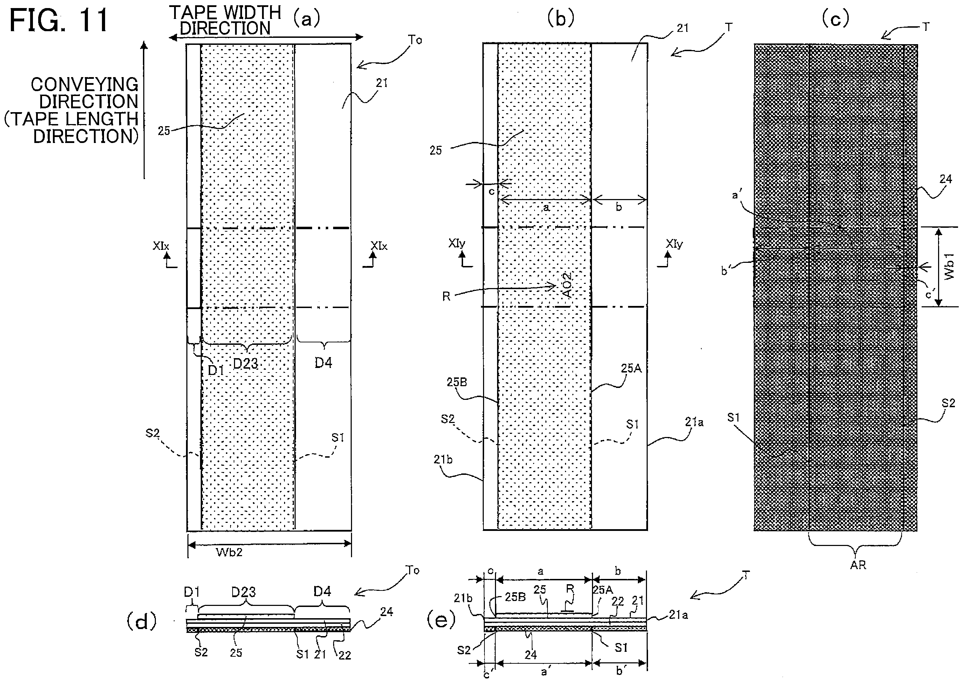

   Fig. 11(a) is a plan view showing a printing tape in an unprinted state according to a variation using a tape of a continuous length type; Fig. 11(b) is a plan view showing a printed printing tape; Fig. 11(c) is a rear view shoeing the printed printing tape; Fig. 11(d) is a cross-sectional view showing the structure shown in Fig. 11(a); and Fig. 11(e) is a cross-sectional view showing the structure shown in Fig. 11(b).

### [Description of Embodiments]

Below, embodiments of the present invention will be described with reference to Fig. 1 through Fig. 7.

### < Label-Creating Device >

First, the functional configuration of a label-creating device according to the present embodiment will be described with reference to Fig. 1.

In Fig. 1, a label-creating device 1 (corresponding to the printer) has a control circuit 2, an operation unit 3 on which the user (operator) can perform desired operations, a display unit 4 for displaying prescribed information, a RAM 5 for storing various information, a conveying roller 6, a print head 7, a cutting lever 8, and a cutter 9.

A cartridge holder 12 is also provided in the label-creating device 1. A tape cartridge 10 (corresponding to the cassette) is detachably mounted in the cartridge holder 12. The tape cartridge 10 has a casing 11, and a tape roll 10A (depicted in the drawing as concentric circles for simplification but actually wound into a roll) accommodated in the casing 11. A printing tape To is wound in a roll shape to form the tape roll 10A. Here, the tape cartridge 10 may be a die-cut label type or a continuous length type (described later with reference to Fig. 11). In the die-cut label type, a printing tape To having half-cuts HC (described later with reference to Fig. 2) formed therein is wound about the tape roll A. In the continuous length type, a printing tape To having no half-cuts HC is wound about the tape roll A. Either type of tape cartridge 10 can be used in the label-creating device 1. Unless otherwise stated, the following example describes a case of using the die-cut label type tape cartridge 10. The half-cuts HC are configured of perforations, for example. In this specification, a "perforation" denotes a plurality of holes provided intermittently in a fine line along the surface direction of a target layer, with each hole penetrating the target layer in the thickness direction (the same applies hereafter).

The control circuit 2 is provided with a CPU and a ROM not shown in the drawings. The control circuit 2 executes various programs pre-stored in the ROM while utilizing the temporary storage function of the RAM 5 in order to perform overall control of the label-creating device 1.

The conveying roller 6 is disposed in opposition to the print head 7. The printing tape To paid out from the tape roll 10A is interposed between the conveying roller 6 and print head 7. By rotating, the conveying roller 6 conveys the printing tape To while pulling the printing tape To from the tape roll 10A.

The print head 7 prints desired print objects (see the printed images R described later) on main label parts Lo (described later in greater detail) of the printing tape To conveyed by the conveying roller 6. The print objects are user-specified characters, icons, and the like.

When actuated through a user operation on the cutting lever 8, the cutter 9 cuts off a printed section of a printing tape T (described later in greater detail) having a plurality of print labels L formed along the conveying direction. Note that the printing tapes To and T correspond to the medium in the claims.

### < Printing Tape >

Figs. 2(a) through 2(e) show the detailed structure of the printing tape To. Fig. 2(a) is a plan view showing the printing tape To in an unprinted state. The up-down direction in the drawing corresponds to the conveying direction (the tape length direction), the left-right direction in the drawing corresponds to the tape width direction, and the near-far direction in the drawing corresponds to the tape thickness direction. Fig. 2(b) shows a plan view of the printing tape T on which the printed image R has been printed and after an excess label portion has been peeled off. Fig. 2(c) is a rear view of the printed printing tape T. Fig. 2(d) is a cross-sectional view taken along the section IIx-IIx of the structure shown in Fig. 2(a). Fig. 2(e) is a cross-sectional view taken along the section IIy-IIy of the structure shown in Fig. 2(b).

As shown in Figs. 2(a) through 2(d), the printing tape To includes an opaque release material layer 24, a transparent adhesive layer 22 (corresponding to an adhesive layer), and a transparent base layer 21 having compositions that include paper or colored film or fabric or metal. The release material layer 24, adhesive layer 22, and base layer 21 are layered in sequence in the thickness direction (the depth direction in the perspective of Fig. 2(a) and Fig. 2(b), the vertical direction in Fig. 2(d), and hence the direction in which each layer is laminated, as will be described later) from a first side of the thickness direction (the bottom in Fig. 2(d), the far side in Figs. 2(a) and 2(b), and the near side in Fig. 2(c)) toward a second side of the thickness direction (the top in Fig. 2(d), the near side in Figs. 2(a) and 2(b) and the far side in Fig. 2(c)). Note that the adhesive layer 22 may be provided in part, rather than over the entire surface, on the back side (the bottom side in Fig. 2(d)) of the base layer 21, i.e., between the base layer 21 and release material layer 24.

In the printing tapes To and T having the layered structure described above, a plurality of main label parts Lo (or print labels L having a printed image R formed on each of the main label parts Lo) are arranged successively in the tape length direction (the up-down direction in the drawings) while separated by an excess label portion LB (see Fig. 2(a)). In other words, main label parts Lo (or print labels L) are arranged discretely along the tape length direction. These main label parts Lo (or print labels L) are all arranged with their longitudinal directions oriented in the tape width direction (left-right direction in the drawings). The base layer 21 is divided by the half-cuts HC (perforations) into the main label parts Lo and the remaining excess label portion LB and is fixed via the adhesive layer 22 to the surface on the second side of the release material layer 24 in the thickness direction. The main label parts Lo correspond to the print label in the claims, and the excess label portion LB corresponds to the label in the claims.

At this time, a print background layer 25 (corresponding to a printing portion) is also partially provided on the front-side (the top in Fig. 2(d)) surface of the base layer 21 at a position within the main label part Lo (see Figs. 2(a), 2(b), 2(d), and 2(e)). The print background layer 25 has a suitable non-transparent color and the thermal head 7 forms the printed image R therein.

Owing to the layered structure described above, each main label part Lo has a length Wb2 in the tape width direction and a width Wb1 in the tape length direction and includes three areas: an adhesive area D1 constituting the left end portion in the drawings; a non-adhesive area D23 provided adjacent to the adhesive area D1 and corresponding to the print background layer 25; and an adhesive area D4 provided adjacent to the non-adhesive area D23. Here, a length Ws2 of the printing tapes To and T in the tape width direction is greater than the length Wb2 of the main label parts Lo in the tape width direction.

In the release material layer 24, rectangular (square) slits S are formed. Each of these slits S is arranged such that the adhesive area D1 and adhesive area D4 are positioned in a slit outer area SO outside the slit S in a plan view, while the non-adhesive area D23 is positioned in a slit inner area SI inside the slit S in a plan view.

The print background layer 25 is arranged with at least a portion overlapping at least a portion of the slit inner area SI enclosed by the slit S. In this example, the print background layers 25 have the same dimensions in the tape width direction and tape length direction as the slits S and the entirety of the print background layers 25 overlap areas AR within the corresponding slits S. In other words, the slits S overlap the print background layers 25 in a plan view.

Note that marks PM are provided on the release material layer 24 in intermediate parts between neighboring slits S. The marks PM are used for positioning control when the conveying roller 6 conveys the printing tape To. That is, the label-creating device 1 is provided with a well-known reflective optical sensor (not illustrated) having a light-emitting unit and a light-receiving unit. During the positioning control, the optical sensor emits light from the light-emitting unit while the light-receiving unit receives light reflected off the release material layer 24. At this time, the marks PM on the release material layer 24 are detected based on the difference in the amount of light received between portions of the release material layer 24 on which the marks PM are provided and all other portions, and the printing tape To is positioned based on these detections.

According to the structure of the release material layer 24 described above, the rectangular slits S are juxtaposed on the printing tapes To and T along the up-down direction, and a print background layer 25 is positioned in each slit inner area AR surrounded by a slit S. A printed image R is formed in the print background layer 25 in each of the print labels L. The printed images R are print objects respectively configured of the text "A01," "A02," "A03," and the like in this example. The term "slit" in this specification denotes a cut penetrating the target layer in the thickness direction (the same applies hereafter). A configuration in which the target layer is partially cut in the thickness direction (the cut enters a fixed amount in the thickness direction) may be used in place of these slits (the same applies hereafter).

### < Separating Print Labels by Peeling >

With the printing tapes To and T described above, first the excess label portion LB is separated from the main label parts Lo and the release material layer 24 (see Figs. 2(b) and 3(a)) by peeling the excess label portion LB from the top surface of the release material layer 24, as shown in Fig. 2(a). Note that a printing tape To may be provided with an initial configuration that omits the excess label portion LB from Fig. 2(a) (i.e., a configuration that omits printed images R from Fig. 2(b)). Next, owing to the square-shaped slits S provided in the release material layer 24 in advance, each print label L included on the printing tape T and having a printed image R formed on the print background layer 25 as described above can be peeled off while leaving the square-shaped portion of the release material layer 24 located inside the slit S (the portion included in the slit inner area AR) on the adhesive layer 22 side (i.e., with the square-shaped portion covering the adhesive layer 22), as shown in Fig. 3(b). In the following description, this peeled off portion will simply be called the "print label L" for convenience. After the print label L has been peeled off, a space (a window WD) will remain in the strip-like release material layer 24 inside the rectangular slit S, as illustrated in Fig. 3(b).

### < Description of the Slits >

As described above, each slit S has a square shape. More specifically, as shown in Fig. 3(b), the slit S includes opposing sides configured of a side Sa (corresponding to the first side) and a side Sb (corresponding to the second side), and opposing sides configured of a side Sc (corresponding to the third side) and a side Sd (corresponding to the fourth side). The main label part Lo (i.e., the print label L after being printed; the same applies hereafter) is fixed to the release material layer 24 so as to span across both the side Sa and the side Sb of the corresponding slit S.

In accordance with the structure of the slit S, the print background layer 25 is formed in a square shape having a side 25a (corresponding to the ninth side, and corresponding to the side Sa of the slit S), a side 25b (corresponding to the tenth side, and corresponding to the side Sb of the slit S), a side 25c (corresponding to the eleventh side, and corresponding to the side Sc of the slit S), and a side 25d of the slit S (corresponding to the twelfth side, and corresponding to the side Sd of the slit S).

In accordance with the above configuration, the main label part Lo is formed in a square shape with opposing sides configured of a side La (corresponding to the fifth side) and a side Lb (corresponding to the sixth side), and opposing sides configured of a side Lc (corresponding to the seventh side) and a side Ld (corresponding to the eighth side). The side Lc and side Ld are parallel to the side Sc and side Sd of the slit S and within proximity (a distance within 3 mm, for example) of the same respectively. As described above, the excess label portion LB is connected to the sides Lc and Ld and sides La and Lb of each main label part Lo via half-cuts HC configured of perforations. However, between the sides Lc and Ld of the main label part Lo and the excess label portion LB only, the perforated half-cuts HC may be replaced with slits similar to the slits S described above. In this case, the printing tape To must be provided with the excess label portion LB to prevent the main label parts Lo or print labels L from flapping or peeling off the printing tape To while being conveyed through the label-creating device 1 in the tape length direction.

Note that the print background layer 25 may be smaller than the slit inner area AR enclosed by the slit S. More specifically, the side Sc of the slit S may be offset toward the side Ld of the main label part Lo rather than the side Lc of the main label part Lo, and side Sd of the slit S may be offset toward the side Lc of the main label part Lo rather than the side Ld of the main label part Lo.

### < Dimensional Relationships among Main Label Parts and Slits >

In the present embodiment, the side La of the main label part Lo is on the side closer to the side Sa than the side Sb of the slit S, and the side Lb of the main label part Lo is on the side closer to the side Sb than the side Sa of the slit S, as illustrated in Fig. 3(b).

Additionally, the shortest distance b' between the side Sa of the slit S and the side La of the main label part Lo is greater than the shortest distance c' between the side Sb of the slit S and the side Lb of the main label part Lo. Further, the shortest distance a' between the side Sa and side Sb of the slit S is between one and three times the shortest distance b'.

In the present embodiment, the side La of the main label part Lo is on the side closer to the side 25a than the side 25b of the print background layer 25, and the side Lb of the main label part Lo is on the side closer to the side 25b than the side 25a of the print background layer 25, as illustrated in Fig. 3(b). Further, the shortest distance b between the side 25a of the print background layer 25 and the side La of the main label part Lo is greater than the shortest distance c between the side 25b of the print background layer 25 and the side Lb of the main label part Lo. Further, the shortest distance a between the side 25a and side 25b of the print background layer 25 is between one and three times the shortest distance b.

Additionally, the shortest distance b between the side 25a of the print background layer 25 and the side La of the main label part Lo is greater than the shortest distance c between the side 25b of the print background layer 25 and the side Lb of the main label part Lo. Further, the shortest distance a between the side 25a and side 25b of the print background layer 25 is between one and three times the shortest distance b.

### < Print Label >

Next, the structure of the print label L generated as described above will be described with reference to Figs. 4(a) and 4(b). Fig. 4(a) shows a plan view of one print label L separated as described above, and Fig. 4(b) shows a cross-sectional view along the section IVB-IVB in Fig. 4(a).

As with the printing tape T described earlier, the print label L shown in Figs. 4(a) and 4(b) has the transparent base layer 21, the transparent adhesive layer 22, and the opaque release material layer 24 arranged in sequence along the thickness direction (the depth direction in Fig. 4(a) and the left-right direction in Fig. 4(b)) from the left side to the right side in Fig. 4(b). The print background layer 25 having the printed image R is partially provided on the second side surface of the base layer 21 relative to the thickness direction. The print label L is provided with the adhesive area D1, non-adhesive area D23, and adhesive area D4 described above from another side (the top in the drawing) of the tape length direction (corresponding to the first direction) toward one side (the bottom in the drawing) in the tape length direction.

In the adhesive area D1, the base layer 21 and adhesive layer 22 are layered in order from the second side toward the first side of the thickness direction (from the left side to the right side in Fig. 4(b)). Thus, the entire region of the adhesive area D1 is provided with an adhesive property owing to the adhesive layer 22. Note that the adhesive area D1 is provided with a length L1 in the tape width direction.

In the non-adhesive area D23, the print background layer 25 provided with the printed image R, the base layer 21, the adhesive layer 22, and the release material layer 24 are layered in order from the second side toward the first side of the thickness direction (from the left side to the right side in Fig. 4(b)). Thus, the entire area of the non-adhesive area D23 is non-adhesive, as the adhesive property of the adhesive layer 22 is inhibited by the release material layer 24. In this example, the print background layer 25 is formed by applying ink (an ink coating layer) of a suitable color (a light transmissive color in this example, including transparent colors) on the base layer 21, and the thermal head 7 forms the printed image R, which is the text "A01," as described above. The non-adhesive area D23 has a length L3 in the tape width direction.

In the adhesive area D4, the base layer 21 and adhesive layer 22 are layered in order from the second side toward the first side of the thickness direction (from the left side to the right side in Fig. 4(b)). Thus, the entire area of the adhesive area D4 is provided with an adhesive property through the adhesive layer 22. The adhesive area D4 has a length L4 in the tape width direction.

The entire surface of the print label L on the second side of the thickness direction corresponds to the front surface in the claims, and the entire surface of the print label L on the first side of the thickness direction corresponds to the back surface of the claims.

### < Procedure for Attaching a Print Label to an Object >

Fig. 5 shows a sample procedure for attaching the print label L to an object. In the example of Fig. 5, the print label L is attached by wrapping the print label L around a cable-like (i.e., columnar-shaped) object 302 (hereinafter simply called a "cable 302" for convenience) having a diameter 2r.

As shown in Fig. 5(a), the print label L extends in the order: adhesive area D1 -> non-adhesive area D23 covered by the separated release material layer 24 -> adhesive area D4. (In other words, the adhesive layer 22 of the print label L is exposed in the adhesive areas D1 and D4, which are not covered by the release material layer 24.) First, the adhesive area D1 and non-adhesive area D23 of the print label L are bent into a concave shape (not illustrated) so that the release material layer 24 side (the right side in Fig. 5(a)) is on the inside.

Next, the cable 302 is placed on the inside of the concave-shaped print label L, and the print label L is wrapped once around the cable 302 to form a cylindrical body encircling the cable 302, as shown in Fig. 5(b). Subsequently, the adhesive layer 22 (functioning as the second portion of the adhesive layer on the side of the second side in the claims) on the adhesive area D 1 positioned on the distal end and the adhesive layer 22 (functioning as the first portion of the adhesive layer on the side of the first side in the claims) on the adhesive area D4 are bonded together while aligning the positions of the two adhesive layers 22 in the tape width direction (also known as butt-sealing). At this time, the length of the release material layer 24 in the tape width direction is at least greater than or equal to the circumference 2πr of the cable 302. As a result, the print label L can be attached to the cable 302 so as to be rotatable about the same by wrapping the non-adhesive area D23 of the print label L around the cable 302 so that the print label L is in a non-adhering state, while fixing the shape of the print label L itself by bonding the two adhesive layers 22 together. Hence, by leaving a portion of the release material layer 24 on the main label part Lo when the release material layer 24 is peeled off, the adhesive layer 22 of the print label L can be prevented from becoming fixed to the cable 302.

Thereafter, the remaining portion of the adhesive area D4 that was not used in the structure encircling the cable 302 is wrapped in the direction of the arrow G indicated in Fig. 5(b) so that the bonded portion of the adhesive area D1 and adhesive area D4 are on the inside (for example, the adhesive area D1 contacts a back-fold region Y, as indicated by an arrow Z). At this time, the adhesive area D4 is wrapped around the outer circumferential portion of the non-adhesive area D23 while covering the non-adhesive area D23 that constitutes the cylindrical body (see Fig. 5(c)). Thus, by using the adhesive property of the adhesive layer 22 to affix the adhesive area D4 to the outer circumferential portion of the non-adhesive area D23, the operation for attaching the print label L to the cable 302 is complete.

### < Sample Application for the Print Label >

Fig. 6 shows a sample application of the print label L described above. In this example, a cable for use with a switching hub that relays information over a network, such as a wired LAN, is applied as the cable 302. The switching hub 300 in Fig. 6 has eight slots 301 in each of a top row and a bottom row (a total of sixteen slots).

In the example of the drawing, plates PL indicating the ID names "A01" through "A08" are provided in sequence from the left to correspond to the eight slots 301 in the top row, and plates PL indicating the ID names "A09" through "A16" are provided in sequence from the left to correspond to the eight slots 301 in the bottom row.

The cable 302 must be appropriately connected to the corresponding slot 301. To facilitate connections, the print label L described above is mounted on the end of each cable 302 that is to be inserted into one of the connector slots 301, and the printed image R formed on each print label L has the same content as the ID name for the slot 301 to which the cable 302 is to be connected. In other words, a print label L printed with the same text as the ID name on the plate PL of the slot 301 to which the cable 302 is to be connected is affixed to the cable 302. This clarifies the correlations between slots 301 and cables 302 that are to be connected to the slots 301, thereby preventing incorrect wiring.

Fig. 7 schematically shows the attached state of the print label L on the cable 302. An axial center k of the cable 302 is also indicated in the drawing. According to the structure described above, the print label L is affixed to the cable 302 constituting the object so as to be rotatable about the cable 302. In the sample state shown in Fig. 7(a), the print background layer 25 is arranged such that the printed image R of "A01" provided on the print background layer 25 is facing the viewer of the drawing. Although the transparent adhesive area D4 is actually present so as to cover the outer circumferential side of the non-adhesive area D23, as depicted in Fig. 5(c), the adhesive area D4 has been omitted from Fig. 7(a) and Fig. 7(b) described later to prevent complicating the diagram and to facilitate understanding. The print label L can be shifted to the orientation shown in Fig. 7(b) by rotating the print label L in the direction of the dashed arrow (i.e., a circumferential direction) from the state shown in Fig. 7(a). Similarly, if the printed image R is not easily readable when the print label L is fixed to the cable 302 in the position shown in Fig. 7(b), the print label L is rotatable as described above owing to the release material layer 24. Accordingly, by rotating the print label L in the direction opposite that described above to the position shown in Fig. 7(a), the printed image R can be made visible.

### < Effects of the Embodiment >

In the present embodiment described above, when the release material layer 24 is peeled off the main label part Lo as described with reference to Fig. 3(b), a square-shaped area of the release material layer 24 positioned inside the slit S separates from the remaining portion of the release material layer 24. Thus, this square-shaped area of the release material layer 24 remains on the main label part Lo (the print label L) and covers the adhesive layer 22. As a result, when forming a cylindrical body around the cable 302 by wrapping the print label L around the cable 302 with the square-shaped release material layer 24 that covers the adhesive layer 22 positioned on the inside, as described above, the adhesive layer 22 in the cylindrical body can be prevented from adhering to the cable 302. Thus, the print label L can eb rotatably attached to the cable 30.

By using a portion of the release material layer 24 to suppress adhesion according to the structure described above, this structure does not degrade due to stress incurred while being wrapped around the object, changes in ambient conditions, or aging, as occurs in the conventional method of coating the adhesive layer 24 with varnish or other non-adhesive material. Thus, the adhesive layer 24 does not become exposed and does not impede rotation.

If the release material layer 24 were transparent and all other portions of the print label L were also transparent, the contents of the printed image R formed by the label-creating device 1 could be difficult to see depending on the color of the cable 302. The print label L in the present embodiment can suppress such adverse effects by using an opaque release material layer 24 having a composition that includes paper or colored film or fabric or metal.

A particular feature of the present embodiment is that the excess label portion LB is connected to the sides Lc and Ld of the main label part Lo (the print label L) through the perforated half-cuts HC. This configuration can suppress the main label part Lo (the print label L) from peeling off the release material layer 24 while being conveyed through the label-creating device 1 better than if the main label part Lo (the print label L) were fixed to the release material layer 24 without the excess label portion LB.

Another feature of the present embodiment is that a nontransparent release material layer 24 can be achieved by configuring the release material layer 24 of a composition that includes paper or colored film or fabric or metal.

### < Variations >

The present invention is not limited to the embodiment described above but may be modified in various ways without departing from the spirit and technical concepts thereof. Such variations will be described below. In each of the following variations, parts equivalent to those in the present embodiment will be designated with the same reference numerals, and duplicate descriptions will be omitted or simplified as appropriate.

### (1) Aligning the Longitudinal Direction of the Label with the Tape Length Direction

### < Printing Tape >

As shown in Figs. 8(a) through 8(d) of this variation, as in the present embodiment described above, the main label parts Lo (or the print labels L having printed images R formed on the corresponding main label parts Lo) are arranged in series on the printing tapes To and T while separated from each other by the excess label portion LB (see Fig. 2(a)). Further, the base layer 21 is separated between the main label parts Lo and the excess label portion LB by the half-cuts HC and is fixed to the second side surface of the release material layer 24 in the thickness direction via the adhesive layer 22.

In this variation, the main label parts Lo or print labels L are arranged such that their longitudinal directions are aligned with the tape length direction of the printing tapes To and T. That is, a plurality of the slits S are provided in the release material layer 24 along the tape length direction, and a plurality of main label parts Lo or print labels L are fixed to the release material layer 24 along the tape length direction. The release material layer 24 is elongated in the tape length direction, which is parallel to the side Sc of each of the plurality of slits S. A plurality of sets that each comprise one slit S and one corresponding main label part Lo (print label L) is juxtaposed along this length direction.

Each main label part Lo has a length Wb in the tape width direction and three areas: the adhesive area D1, non-adhesive area D23, and adhesive area D4. The printing tapes To and T have a length Ws in the tape width direction that is greater than the length Wb of the main label part Lo in the tape width direction. As in the present embodiment described above, rectangular-shaped (square-shaped) slits S are provided in the release material layer 24, and the print background layers 25 are arranged so that at least a portion of each print background layer 25 overlaps at least a portion of the slit inner area AR enclosed by the corresponding slit S. In this example, the slits S overlap the print background layers 25 in a plan view. Further, as in the present embodiment, marks PM are provided on the release material layer 24 for positioning control when the printing tape To is conveyed. Each mark PM is provided in an intermediate part between two neighboring slits S, S (but in a plan view are positioned inside the main label part Lo or print label L, as illustrated in Fig. 8(c) and Fig. 8(d)). Also, as in the present embodiment, printed images R configured of the text "A01," "A02," and "A03" are formed on the print background layers 25 of the corresponding print labels L.

As in the present embodiment described above, with the printing tapes To and T of this variation, first the excess label portion LB is separated from the main label parts Lo and the release material layer 24 (see Fig. 8(b) and Fig. 9(a)) by peeling the excess label portion LB from the top surface of the release material layer 24, as shown in Fig. 8(a). Note that a printing tape To may be provided with an initial configuration that omits the excess label portion LB from Fig. 8(a) (i.e., a configuration that omits the printed images R from Fig. 8(b)). Next, owing to the square-shaped slits S described above, each print label L having a printed image R formed on the print background layer 25 can be peeled off while the square-shaped portion of the release material layer 24 positioned inside the slit S remains covering the release material layer 24, as illustrated in Fig. 9(d). After the print label L has been peeled off, a space (a window WD) will remain on the strip-like release material layer 24 inside the rectangular slit S, as illustrated in Fig. 9(f).

As in the present embodiment described above, each slit S has opposing sides configured of a side Sa (corresponding to the first side) and a side Sb (corresponding to the second side) and opposing sides configured of a side Sc (corresponding to the third side) and a side Sd (corresponding to the fourth side), as illustrated in Figs. 9(d) through 9(f). The main label part Lo (print label L) is fixed to the release material layer 24 so as to span across both the side Sa and the side Sb of the corresponding slit S (see Figs. 9(d) through 9(f)). In accordance with the above structure, the print background layer 25 is formed in a square shape having the side 25a (corresponding to the ninth side), the side 25b (corresponding to the tenth side), the side 25c (corresponding to the eleventh side), and the side 25d (corresponding to the twelfth side). In accordance with this structure, the main label part Lo is formed in a square shape having opposing sides configured of a side La (corresponding to the fifth side) and a side Lb (corresponding to the sixth side) and opposing sides configured of a side Lc (corresponding to the seventh side) and a side Ld (corresponding to the eighth side). The excess label portion LB described above is connected to the sides Lc and Ld and the sides La and Lb of the main label part Lo through the perforated half-cuts HC. Note that slits similar to the slits S described above may be provided in place of the perforated half-cuts HC only between the excess label portion LB and the sides La and Lb of the main label part Lo. However, in this case the printing tape To must be provided with the excess label portion LB described above. Also as described above, the print background layer 25 may be smaller than the slit inner area AR enclosed in the corresponding slit S.

In this variation, the dimensional relationship among the main label parts and the slits and the structure of the print label L that is produced are similar to those in the embodiment and, hence, a description will not be repeated here.

The present variation can obtain the same effects described in the present embodiment.

In the structures of the present embodiment described above and the variation (1) thereof, a plurality of sets, each comprising one slit S and one corresponding main label part Lo (print label L), is provided on the release material layer 24. The sets are arranged discretely on the release material layer 24 at intervals in the tape length direction (with the excess label portion LB present between sets), but variation (1) is not limited to this configuration. That is, sets of slits S and main label parts Lo (print labels L) may be arranged adjacent to each other (with no gaps therebetween) on the release material layer 24. This structure can also obtain the same effects described above.

As illustrated in Fig. 10(a), Fig. 10(b), Fig. 10(c), and Fig. 10(d) that correspond to Fig. 8(b), Fig. 8(c), Fig. 8(d), and Fig. 8(f) described above, the length of the release material layer 24 may be widened in the tape width direction, and a plurality of columns (two columns in this example) of main label parts Lo (print labels L) may be arranged on the release material layer 24 adj acent to each other in the tape width direction. In other words, a plurality of label bodies may be arranged along the tape length direction. Each label body has a plurality of sets (two sets in this example), each comprising a slit S and a main label part Lo (print label L), arranged adjacent to each other in the tape width direction. This variation can also obtain the same effects described above.

### (2) Using Tape of the Continuous Length Type

In this variation, a printing tape To without the half-cuts HC described above (known as a continuous length type) is wound into the tape roll A and accommodated in the tape cartridge 10.

Figs. 11(a) through 11(d) show a detailed structure of the printing tapes To and T in this variation.

Fig. 11(a) is a plan view of an unprinted printing tape To; Fig. 11(b) is a plan view of the printing tape T after the printed image R has been printed; Fig. 11(c) is a rear view of the printed printing tape T; Fig. 11(d) is a cross-sectional view taken along the section XIx-XIx in the structure shown in Fig. 11(a); and Fig. 11(e) is a cross-sectional view taken along the section XIy-XIy in the structure shown in Fig. 11(b).

As described above, the printing tapes To and T include an opaque release material layer 24, a transparent adhesive layer 22 (corresponding to the adhesive layer), and a transparent base layer 21 having compositions that include paper or colored film or fabric or metal, as shown in Figs. 11(a) through 11(e). The release material layer 24, adhesive layer 22, and base layer 21 are layered in sequence from a first side of the thickness direction (the bottom in Fig. 11(d) and Fig. 11(e), the far side in Fig. 11(a) and Fig. 11(b), and the near side in Fig. 11(c)) toward a second side of the thickness direction (the top in Fig. 11(d) and Fig. 11(e), the near side in Fig. 11(a) and Fig. 11(b), and the far side in Fig. 11(c)). The base layer 21 is fixed to the surface of the release material layer 24 on the second side in the thickness direction via the adhesive layer 22.

As described above, the adhesive layer 22 may be provided in part, rather than over the entire surface, on the back side of the base layer 21, i.e., between the base layer 21 and release material layer 24. A print background layer 25 (corresponding to the printing layer) is also partially provided on the front-side (the top in Fig. 11(d) and Fig. 11(e)) surface of the base layer 21. The print background layer 25 has a suitable nontransparent color and the printed image R formed by the thermal head 7. The print background layer 25 is a rectangular-shaped layer having an edge 25A (corresponding to the first edge) on one side (the right side in Fig. 11(b)), and an edge 25B (corresponding to the second edge) on the other side (the left side in Fig. 11(b)). The length of the printing tapes To and T in the tape width direction is the Wb2 described above.

A plurality of slits is provided in the release material layer 24. The slits extend linearly in the tape length direction (corresponding to the first direction) from one short side of the rectangular release material layer 24 (the bottom in Fig. 11(c)) to the other short side (the top in Fig. 11(c)). In this example, the release material layer 24 is provided with two slits, and specifically a slit S1 (corresponding to the first slit), and a slit S2 (corresponding to the second slit). In this case, the base layer 21 is fixed to the release material layer 24 via the adhesive layer 22 so as to span across both the slit S1 and the slit S2.

Here, the print background layer 25 is disposed so that at least a portion of the print background layer 25 overlaps at least a portion of the slit inner area AR enclosed by the slits S1 and S2. The dimension of the print background layer 25 in the tape width direction is equal to or smaller than the same dimension of the slit inner area AR. In this example, the print background layer 25 and the slit inner area AR have the same length in the tape width direction, and the entirety of the print background layer 25 overlaps the slit inner area AR. In other words, the slit inner area AR overlaps the print background layer 25 in a plan view. In this example, the printed images R formed on the print background layer 25 of the printing tape T comprise print objects including the text "A01," "A02," "A03," .... The base layer 21, adhesive layer 22, and print background layer 25 correspond to the print label layer in the claims.

As shown in Fig. 11(b), Fig. 11(c), and Fig. 11(e), one edge 21a on one side (the right side in the drawings) of the base layer 21 is on the side closer to the slit S1 than the slit S2, and another edge 21b on another side (the left side in the drawings) of the base layer 21 is on the side closer to the slit S2 than the slit S1. Further, the shortest distance b' between the slit S1 and the one edge 21a on the one side of the base layer 21 is greater than the shortest distance c' between the slit S2 and the other edge 21b on the other side of the base layer 21, and the shortest distance a' between the slit S1 and slit S2 is between one and three times the shortest distance b' between the slit S1 and the one edge 21a on the one side of the base layer 21.

Further, the one edge 21a on the one side of the base layer 21 is on the side closer to the edge 25A than the edge 25B of the print background layer 25, and the other edge 21b on the other side of the base layer 21 is on the side closer to the edge 25B than the edge 25A of the print background layer 25. Further, the shortest distance b between the edge 25A of the print background layer 25 and the one edge 21a on the one side of the base layer 21 is greater than the shortest distance c between the edge 25B of the print background layer 25 and the other edge 21b on the other side of the base layer 21, and the shortest distance a between the edge 25A and edge 25B of the print background layer 25 is between one and three times the shortest distance b between the edge 25A of the print background layer 25 and the one edge 21a on the one side of the base layer 21.

As described earlier, the layered structure for the printing tapes To and T described above has three regions, i.e., the adhesive area D1, the non-adhesive area D23 provided adjacent to the adhesive area D1 and corresponding to the print background layer 25, and the adhesive area D4 provided adj acent to the non-adhesive area D23. By cutting the printing tape T with the cutter 9 after the printing tape T has been printed, the label-creating device 1 can obtain a print label L having the width Wb1 in the tape length direction (depicted with two-dot chain lines in Fig. 11) and substantially the same structure as described in the preferred embodiment and variation (1) (i.e., a structure similar to that in Fig. 4). Accordingly, this variation can obtain the same effects described above.

### (3) Other Variations

When dimensions and sizes are described as being "identical," "equivalent," "different," and the like in appearance in the above description, these terms are not intended to be taken in their strictest sense. In other words, the terms "identical," equivalent," and different" may signify "substantially identical," "substantially equivalent," and "substantially different" to allow for design and manufacturing tolerances and error.

The arrows shown in Fig. 1 indicate an example of the signal flow in the above description, but the directions of signal flow are not limited to this example.

In addition to what has already been described, the methods according to the present embodiment and its variations may be used in suitable combinations.

In addition, although not illustrated individually, the present invention may be implemented with various modifications without departing from the spirit of the invention.

### [Reference Signs List]

- 1: label-creating device (printer)
- 10: tape cartridge (cassette)
- 21: base layer
- 21a: one edge on one side
- 21b: another edge on another side
- 22: adhesive layer (adhesive layer)
- 24: release material layer
- 25: print background layer (printing portion, printing layer)
- 25A: edge on one side (first edge)
- 25B: edge on the other side (second edge)
- 25a: side (ninth side)
- 25b: side (tenth side)
- 25c: side (eleventh side)
- 25d: side (twelfth side)
- AR: slit inner area
- HC: half-cut
- L: print label
- La: side (fifth side)
- Lb: side (sixth side)
- Lc: side (seventh side)
- Ld: side (eighth side)
- Lo: main label part (print label)
- LB: excess label portion (label)
- R: printed image
- S: slit
- S1: slit (first slit)
- S2: slit (second slit)
- Sa: side (first side)
- Sb: side (second side)
- Sc: side (third side)
- Sd: side (fourth side)
- T: printing tape (medium)
- To: printing tape (medium)

## Claims

1. A medium to be mounted in and to be printed with a printer, the medium comprising:
a release material that is opaque;
a slit provided in the release material and having a square shape including a first side, a second side, a third side, and a fourth side, the first side and the second side opposing each other, the third side and the fourth side opposing each other; and
a print label fixed to the release material so as to span across the first side of the slit.

2. The medium according to claim 1,
wherein the print label is fixed to the release material so as to span across both the first side and the second side of the slit.

3. The medium according to claim 2,
wherein the print label has a square shape including a fifth side, a sixth side, a seventh side, and an eighth side, the fifth side and the sixth side opposing each other, the seventh side and the eighth side opposing each other, and
wherein the seventh side and the eighth side of the print label are parallel to respective ones of the third side and the fourth side of the slit and within proximity of respective ones of the third side and the fourth side of the slit.

4. The medium according to claim 3,
wherein the third side of the slit is offset toward the eighth side of the print label rather than the seventh side of the print label, and
wherein the fourth side of the slit is offset toward the seventh side of the print label rather than the eighth side of the print label.

5. The medium according to claim 3,
wherein the fifth side of the print label is on a side closer to the first side of the slit than the second side of the slit,
wherein the sixth side of the print label is on a side closer to the second side of the slit than the first side of the slit,
wherein a shortest distance between the first side of the slit and the fifth side of the print label is greater than a shortest distance between the second side of the slit and the sixth side of the print label, and
wherein a shortest distance between the first side of the slit and the second side of the slit is equal to or greater than the shortest distance between the first side of the slit and the fifth side of the print label and is equal to or smaller than three times the shortest distance between the first side of the slit and the fifth side of the print label.

6. The medium according to claim 3,
wherein the print label comprises a printing portion having a square shape including a ninth side, a tenth side, an eleventh side, and a twelfth side, the ninth side and the tenth side opposing each other, the eleventh side and the twelfth side opposing each other,
wherein the fifth side of the print label is on a side closer to the ninth side of the printing portion than the tenth side of the printing portion,
wherein the sixth side of the print label is on a side closer to the tenth side of the printing portion than the ninth side of the printing portion,
wherein a shortest distance between the ninth side of the printing portion and the fifth side of the print label is greater than a shortest distance between the tenth side of the printing portion and the sixth side of the print label, and
wherein a shortest distance between the ninth side of the printing portion and the tenth side of the printing portion is equal to or greater than the shortest distance between the ninth side of the printing portion and the fifth side of the print label and is equal to or smaller than three times the shortest distance between the ninth side of the printing portion and the fifth side of the print label.

7. The medium according to claim 1,
wherein the print label comprises a printing portion having a shape and a size same as a shape and a size of an area enclosed by the slit.

8. The medium according to claim 1,
wherein the print label comprises a printing portion having a size smaller than a size of an area enclosed by the slit.

9. The medium according to claim 3, further comprising:
a label fixed to the release material and connected to the seventh side and the eight side of the print label via perforations.

10. A medium to be mounted in and to be printed with a printer, the medium comprising:
a release material having a composition that includes paper or colored film or fabric or metal;
a slit provided in the release material and having a square shape including a first side, a second side, a third side, and a fourth side, the first side and the second side opposing each other, the third side and the fourth side opposing each other; and
a print label fixed to the release material so as to span across the first side of the slit.

11. The medium according to claim 1 or claim 10,
wherein the slit comprises a plurality of slits each of which is provided in the release material,
wherein the print label comprises a plurality of print labels each of which is fixed to the release material corresponding to respective ones of the plurality of slits,
wherein the release material is elongated in a first direction parallel to the third side (Sc) of each of the plurality of slits, and
wherein a plurality of sets of slits and print labels is juxtaposed in the first direction on the release material, each of the plurality of sets of slits and print labels including one of the plurality of slits and corresponding one of the plurality of print labels.

12. The medium according to claim 11,
wherein the plurality of sets of slits and print labels are arranged adjacent to each other with no gaps therebetween.

13. A medium to be mounted in and to be printed with a printer, the medium comprising:
a release material layer having a rectangular shape including a first short side on one side in a first direction and a second short side on another side in the first direction;
at least two slits parallel to each other, each of the at least two slits extending in the first direction from the first short side to the second short side of the release material layer; and
a print label layer fixed to the release material layer so as to span across the at least two slits,
wherein the at least two slits include a first slit and a second slit.

14. The medium according to claim 13,
wherein the print label layer has one edge on one side and another edge on another side, the one edge being on a side closer to the first slit than the second slit, the other edge being on a side closer to the second slit than the first slit,
wherein a shortest distance between the first slit and the one edge of the print label layer is greater than a shortest distance between the second slit and the other edge of the print label layer, and
wherein a shortest distance between the first slit and the second slit is equal to or greater than the shortest distance between the first slit and the one edge of the print label layer and is equal to or smaller than three times the shortest distance between the first slit and the one edge of the print label layer.

15. The medium according to claim 14,
wherein the print label layer comprises a printing layer having a rectangular shape including a first edge and a second edge, the first edge and the second edge opposing each other, the printing layer being arranged with at least a portion of the printing layer overlapping at least a portion of an area enclosed by the first slit and the second slit,
wherein the one edge of the print label layer is on a side closer to the first edge of the printing layer than the second edge of the printing layer,
wherein the other edge of the print label layer is on a side closer to the second edge of the printing layer than the first edge of the printing layer,
wherein a shortest distance between the first edge of the printing layer and the one edge of the print label layer is greater than a shortest distance between the second edge of the printing layer and the other edge of the print label layer, and
wherein a shortest distance between the first edge of the printing layer and the second edge of the printing layer is equal to or greater than the shortest distance between the first edge of the printing layer and the one edge of the print label layer and is equal to or smaller than three times the shortest distance between the first edge of the printing layer and the one edge of the print label layer.

16. The medium according to claim 13,
wherein the print label layer comprises a printing layer having a dimension in a second direction same as a dimension in the second direction of an area enclosed by the first slit and the second slit, the second direction being orthogonal to the first direction.

17. The medium according to claim 13,
wherein the print label layer comprises a printing layer having a dimension in a second direction smaller than a dimension in the second direction of an area enclosed by the first slit and the second slit, the second direction being orthogonal to the first direction.

18. The medium according to claim 13,
wherein the at least two slits are two slits.

19. The medium according to any one of claims 1 to 18,
wherein the medium has a roll shape, and is accommodated in a cassette to be detachably mounted in the printer.

20. A method of wrapping a label around a cable, the label having a front surface on which a printed image is formed and a back surface, the back surface including an adhesive layer on which a release material is fixed so that the adhesive layer is exposed, the release material having a square shape including a first side and a second side opposing each other, the adhesive layer having a first portion on a side of the first side of the release material and a second portion on a side of the second side of the release material, the first portion and the second portion being exposed, the method comprising:
encircling the cable with the label so that the release material is on an inside; and
bonding the first portion of the adhesive layer and the second portion of the adhesive layer together while aligning the first side and the second side in an encircling direction.
